# EUROPEAN PATENT APPLICATION

(11) **EP 4 480 830 A1**
(43) Date of publication of application: **25.12.2024**
(21) Application number: 23756475.2
(22) Date of filing: 17.02.2023
(51) Int. Cl.: B64G 1/10, B64G 1/64, B64G 4/00

(54) **SYSTEM FOR MAKING OBJECT COOPERATIVE AND METHOD FOR MAKING OBJECT COOPERATIVE**

(30) Priority: 17.02.2022 JP 2022022593; 17.02.2022 JP 2022022598
(71) Applicant: Astroscale Japan Inc., Tokyo, 130-0013 (JP)
(72) Inventor: IWAI, Takashi, Tokyo 130-0013 (JP); NISHIDA, Shin-Ichiro, Tokyo 130-0013 (JP); LINDSAY, Michael, Tokyo 130-0013 (JP); FUJITA, Sho, Tokyo 130-0013 (JP)
(74) Representative: Plasseraud IP
(86) International application number: PCT/JP2023/005769
(87) International publication number: WO 2023/157951

(57) **Abstract**

To provide a system capable of eliminating a complicated function or a high-precision control necessary when a service satellite approaches an outer space non-cooperative object or the like for providing an on-orbit service or removing debris. A cooperative objectification system 1, which cooperatively objectifies an outer space non-cooperative object C existing in an outer space, comprises: a spacecraft S configured to move in the outer space; and a cooperative interface M attached to a surface of the outer space non-cooperative object C by the spacecraft S.

## Description

### Technical Field

The present invention relates to a cooperative objectification system and a cooperative objectification method.

### Background Art

In recent years, a technique related to a service satellite configured to provide an on-orbit service or remove debris by approaching an outer space non-cooperative object (artificial satellite that has run out of fuel, space debris, or the like) that does not have an interface such as a marker has been proposed (see, for example, Patent Document 1). The service satellite has a high-level sensing function and a control function of a relative position and attitude necessary for approaching or connecting to an object of which a shape, a thermooptical characteristic, and the like are lots of cases.

### Citation List

### Patent Document

Patent Document 1: Japanese Patent Application Laid-Open No. 2022-65689

### Summary of Invention

### Technical Problem

However, such a service satellite has the following problems. That is, there is a problem that the sensing function or the control function of the position and the attitude, which is necessary for providing the on-orbit service or performing debris removal by approaching the outer space non-cooperative object, is often complicated, and it is difficult to perform the sensing or the position and attitude control with high accuracy.

The present invention is made in view of such circumstances, and an object of the present invention is to provide a system capable of eliminating a complicated function or a high-precision control necessary when a service satellite approaches an outer space non-cooperative object or the like for providing an on-orbit service or removing debris.

### Solution to Problem

In order to achieve the object, a cooperative objectification system according to the present invention is a cooperative objectification system that cooperatively objectifies an outer space non-cooperative object existing in an outer space, the cooperative objectification system including a spacecraft configured to move in the outer space; and a cooperative interface attached to a surface of the outer space non-cooperative object by the spacecraft.

In addition, a cooperative objectification method according to the present invention is a cooperative objectification method of cooperatively objectifying an outer space non-cooperative object existing in an outer space, the cooperative objectification method including a step of attaching a cooperative interface to a surface of the outer space non-cooperative object by a spacecraft configured to move in the outer space.

With the adoption of such a configuration and method, the cooperative interface is able to be attached to the surface of the outer space non-cooperative object (artificial satellite that has run out of fuel, space debris, or the like) by the spacecraft configured to move in the outer space. Therefore, a service satellite configured to provide the on-orbit service or perform debris removal is able to easily approach the outer space non-cooperative object by using the cooperative interface, and is able to easily perform monitoring or docking after the approach. Therefore, it is possible to eliminate a complicated function or a high-precision control necessary when the service satellite approaches the outer space non-cooperative object or the like for providing the on-orbit service or removing debris, and it is easy to perform the rendezvous, the approach operation, the provision of the on-orbit service, and the like. As a result, it is possible to realize a reduction of the cost required for debris removal or the provision of the on-orbit service, and to provide the debris removal or the on-orbit service more safely. In addition, since various design margins necessary to ensure safety are able to be kept to a minimum, it is also possible to realize reduction of the cost required for debris removal or the provision of the on-orbit service.

In the cooperative objectification system according to the present invention, it is possible to adopt a plate-like body having an optical marker configured to reflect light as the cooperative interface. In such a case, a surface of the plate-like body is able to have an adsorption force, the spacecraft is able to have a grip portion configured to grip the plate-like body, and the surface of the plate-like body gripped by the grip portion is pressed against the surface of the outer space non-cooperative object so that the surface of the plate-like body is adsorbed onto the surface of the outer space non-cooperative object, and the plate-like body is attached to the outer space non-cooperative object. The surface of the plate-like body is able to have the adsorption force using Adhesive Textile, Gecko, Velcro, and/or Coldwelding.

In addition, in the cooperative objectification system according to the present invention, the spacecraft is able to have a coating portion that applies an approach marker as the cooperative interface to the surface of the outer space non-cooperative object.

In addition, in the cooperative objectification system according to the present invention, it is possible to adopt the spacecraft that has a robot arm and a grip mechanism provided at a distal end of the robot arm. In such a case, it is possible to adopt the grip mechanism configured to attach the cooperative interface, to grip the outer space non-cooperative object, and to be separated from the robot arm together with the cooperative interface.

With the adoption of such a configuration, the cooperative interface is attached to the grip mechanism of the robot arm of the spacecraft configured to move in the outer space, the outer space non-cooperative object is gripped by the grip mechanism, and the grip mechanism is separated from the robot arm together with the cooperative interface, such that the cooperative interface and the outer space non-cooperative object are able to be integrated.

### Advantageous Effects of Invention

According to the present invention, it is possible to provide a system capable of eliminating a complicated function or a high-precision control necessary when a service satellite approaches an outer space non-cooperative object or the like for providing an on-orbit service or removing debris.

### Brief Description of Drawings

Fig. 1 is a diagram showing an outline of a cooperative objectification system according to a first embodiment of the present invention.
Fig. 2 is a diagram showing another application example (aspect in which a plurality of outer space non-cooperative objects is processed by a single spacecraft) of the cooperative objectification system according to the first embodiment of the present invention.
Fig. 3 is a diagram showing an outline of a cooperative objectification system according to a second embodiment of the present invention, in which (A) is a diagram showing a state in which the outer space non-cooperative object is gripped by a grip mechanism of a robot arm of a spacecraft, and (B) is a diagram showing a state in which the grip mechanism of the spacecraft is separated from the robot arm.

### Description of Embodiments

Hereinafter, each embodiment of the present invention will be described with reference to the drawings.

### <First Embodiment>

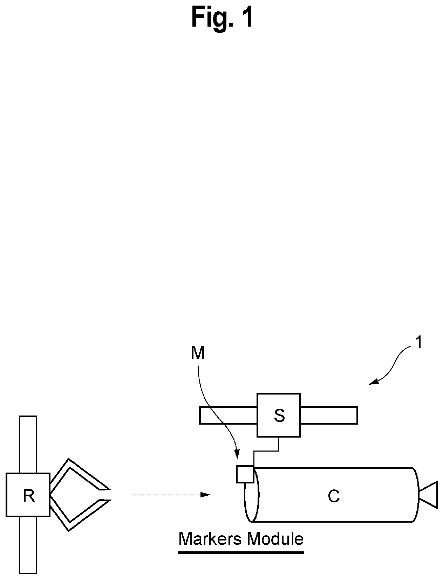

First, a configuration of a cooperative objectification system 1 (hereinafter, referred to as a "present system") according to a first embodiment of the present invention will be described with reference to Fig. 1. The present system 1 is a cooperative objectification system that cooperatively objectifies an outer space non-cooperative object (artificial satellite that has run out of fuel, space debris, or the like) C existing in an outer space, and includes a spacecraft S configured to move in the outer space, and a cooperative interface M attached to a surface of the outer space non-cooperative object C by the spacecraft S.

In the present embodiment, as the cooperative interface M, a plate-like body having an optical marker is adopted. The optical marker is attached to one surface of the plate-like body and is configured to reflect light. For example, the optical marker is able to include a retroreflective material in which an emission direction of light is able to be made to match with an incidence direction. In a case in which a heat insulating film is formed on the surface to which the optical marker is attached, an optical marker that reflects light in a predetermined wavelength range (for example, light in a near-ultraviolet range having a wavelength range of 300 to 400 nm) absorbed by the heat insulating film is also able to be adopted. In addition, the other surface of the plate-like body in the present embodiment has an adsorption force using Adhesive Textile, Gecko, Velcro, and/or Coldwelding.

The spacecraft S according to the present embodiment has a grip portion (robot arm or the like) that grips the plate-like body as the cooperative interface M. The plate-like body is gripped by a grip portion of the spacecraft S, and the surface of the plate-like body (surface having an adsorption force on a side opposite to the optical marker) is pressed against the surface of the outer space non-cooperative object C, such that the surface of the plate-like body is able to be adsorbed onto the surface of the outer space non-cooperative object C, and the plate-like body is able to be attached to the outer space non-cooperative object C.

A cooperative objectification method of cooperatively objectifying the outer space non-cooperative object C (cooperative objectification method) using the present system 1 includes a step of attaching the cooperative interface M to the surface of the outer space non-cooperative object C by the spacecraft S configured to move in the outer space. In such a step, for example, as already described, the plate-like body as the cooperative interface M is gripped by the grip portion of the spacecraft S, and the surface of the plate-like body (surface having the adsorption force on a side opposite to the optical marker) is pressed against the surface of the outer space non-cooperative object C, such that the surface of the plate-like body is able to be adsorbed onto the surface of the outer space non-cooperative object C and the plate-like body is able to be attached to the outer space non-cooperative object C.

In the cooperative objectification system 1 according to the above embodiment, the cooperative interface M is able to be attached to the surface of the outer space non-cooperative object C by the spacecraft S configured to move in the outer space. Therefore, a service satellite R (see Fig. 1) configured to provide the on-orbit service or perform debris removal is able to easily approach the outer space non-cooperative object C by using the cooperative interface M, and is able to easily perform monitoring or docking after the approach. Therefore, it is possible to eliminate a complicated function or a high-precision control necessary when the service satellite R approaches the outer space non-cooperative object C or the like for providing the on-orbit service or removing debris, and it is easy to perform the rendezvous, the approach operation, the provision of the on-orbit service, and the like. As a result, it is possible to realize a reduction of the cost required for debris removal or the provision of the on-orbit service, and to provide the debris removal or the on-orbit service more safely. In addition, since various design margins necessary to ensure safety are able to be kept to a minimum, it is also possible to realize reduction of the cost required for debris removal or the provision of the on-orbit service.

It should be noted that the configurations of the spacecraft and the cooperative interface are not limited to the configurations described in the present embodiment. For example, as the cooperative interface, an approach marker that is applied to the surface of the outer space non-cooperative object C is able to be adopted, and a spacecraft having a coating portion that applies the approach marker to the surface of the outer space non-cooperative object C is able to also be adopted.

In addition, in the embodiment of Fig. 1, an example is shown in which the cooperative interface M is attached to the "single" outer space non-cooperative object C using the single spacecraft S, and various services (provision of the on-orbit service or debris removal) are performed on the outer space non-cooperative object C, but the single spacecraft S is also able to correspond to a "plurality of" outer space non-cooperative objects C.

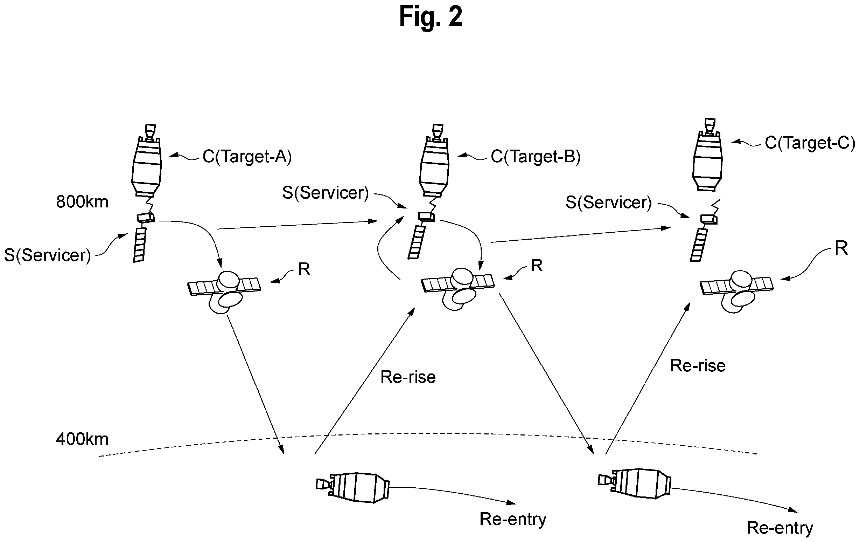

That is, as shown in Fig. 2, for example, a single Servicer (spacecraft S) that travels on an earth low orbit at an altitude of 400 km is caused to approach a Target-A (first outer space non-cooperative object C) that is on an orbit at an altitude of 800 km, and the cooperative interface M is attached to the Target-A. Thereafter, the single Servicer is caused to approach a Target-B (second outer space non-cooperative object C) that is on a different orbit or the same orbit, and the cooperative interface M is attached to the Target-B. Then, the single Servicer is caused to approach a Target-C (third outer space non-cooperative object C) that is on a different orbit or the same orbit, and the cooperative interface M is attached to the Target-C.

The "plurality" of outer space non-cooperative objects (Target-A, Target-B, and Target-C) to which the cooperative interface M is attached by the single spacecraft S (Servicer) are able to be processed by a separate or same service satellite. For example, in a case where these "plurality" of outer space non-cooperative objects C are space debris, as shown in Fig. 2, the "plurality" of service satellites R for debris removal are able to approach these outer space non-cooperative objects C by using the cooperative interface M, respectively. Then, the service satellite R for debris removal is able to capture each of the outer space non-cooperative objects C and enter (re-entry) the atmosphere together with the outer space non-cooperative objects C (or release the space debris C at the low altitude) to perform debris removal.

### <Second Embodiment>

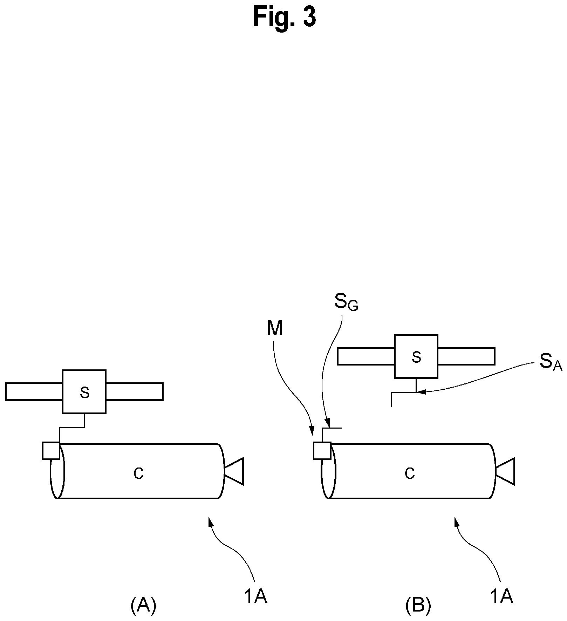

Next, a configuration of a cooperative objectification system 1A according to a second embodiment of the present invention will be described with reference to Fig. 3. The present system 1A is a system that cooperatively objectifies the outer space non-cooperative object C existing in the outer space, similarly to the first embodiment, and includes a spacecraft S configured to move in the outer space, and a cooperative interface M attached to a surface of the outer space non-cooperative object C by the spacecraft S.

The spacecraft S according to the present embodiment has a robot arm S_{A} and a grip mechanism S_{G} provided at a distal end of the robot arm S_{A}. The grip mechanism S_{G} is configured to attach the cooperative interface M, to grip the outer space non-cooperative object C, and to be separated from the robot arm S_{A} together with the cooperative interface M. The configuration of the grip mechanism S_{G} is not particularly limited as long as the grip mechanism S_{G} is able to perform such functions.

In addition, various devices, such as a docking interface, an angular velocity detumbling device, a drag sail device, and a tether device for orbit descent, are able to be attached to the grip mechanism S_{G} together with the cooperative interface M. In this way, the outer space non-cooperative object C is gripped by the grip mechanism S_{G}, and the grip mechanism S_{G} is separated from the robot arm S_{A} together with the device, such that the device and the outer space non-cooperative object C are able to be integrated.

A cooperative objectification method of cooperatively objectifying the outer space non-cooperative object C (cooperative objectification method) using the present system 1A includes a step of attaching the cooperative interface M to the surface of the outer space non-cooperative object C by the spacecraft S configured to move in the outer space. In the present embodiment, the cooperative interface M is attached to the grip mechanism S_{G} of the robot arm S_{A} of the spacecraft S, the outer space non-cooperative object C is gripped by the grip mechanism S_{G}, and the grip mechanism S_{G} is separated from the robot arm S_{A} together with the cooperative interface M, such that the cooperative interface M is able to be attached to the outer space non-cooperative object C.

The same operations and effects as those of the first embodiment are able to be obtained in the cooperative objectification system 1A according to the above-described embodiment.

The present invention is not limited to each of the above-described embodiments, and those embodiments which are appropriately modified by a person skilled in the art are also within the scope of the present invention as long as the modifications have the features of the present invention. In other words, each element, a disposition thereof, material, a condition, a shape, a size, and the like included in each of the above-described embodiments are not limited to those exemplified, and are able to be appropriately changed. In addition, each element included in each of the above-described embodiments is able to be combined as much as technically possible, and the combination of the elements is also included in the scope of the present invention as long as the features of the present invention are included.

### Reference Signs List

- 1, 1A: cooperative objectification system
- C: outer space non-cooperative object
- M: cooperative interface
- S: spacecraft
- S_{A}: robot arm
- S_{G}: grip mechanism

## Claims

1. A cooperative objectification system that cooperatively objectifies an outer space non-cooperative object existing in an outer space, the cooperative objectification system comprising:
a spacecraft configured to move in the outer space; and
a cooperative interface attached to a surface of the outer space non-cooperative object by the spacecraft.

2. The cooperative objectification system according to claim 1, wherein the cooperative interface is a plate-like body having an optical marker configured to reflect light.

3. The cooperative objectification system according to claim 2, wherein a surface of the plate-like body has an adsorption force,
wherein the spacecraft has a grip portion configured to grip the plate-like body, and
wherein the surface of the plate-like body gripped by the grip portion is pressed against the surface of the outer space non-cooperative object so that the surface of the plate-like body is adsorbed onto the surface of the outer space non-cooperative object, and the plate-like body is attached to the outer space non-cooperative object.

4. The cooperative objectification system according to claim 3, wherein the surface of the plate-like body has the adsorption force using Adhesive Textile, Gecko, Velcro, and/or Coldwelding.

5. The cooperative objectification system according to claim 1, wherein the spacecraft has a coating portion that applies an approach marker as the cooperative interface to the surface of the outer space non-cooperative object.

6. The cooperative objectification system according to claim 1, wherein the spacecraft has a robot arm and a grip mechanism provided at a distal end of the robot arm, and
wherein the grip mechanism is configured to attach the cooperative interface, to grip the outer space non-cooperative object, and to be separated from the robot arm together with the cooperative interface.

7. A cooperative objectification method of cooperatively objectifying an outer space non-cooperative object existing in an outer space, the cooperative objectification method comprising:
a step of attaching a cooperative interface to a surface of the outer space non-cooperative object by a spacecraft configured to move in the outer space.
